# EUROPÄISCHE PATENTSCHRIFT

(11) **EP 4 127 453 B1**
(45) Veröffentlichungstag und Bekanntmachung des Hinweises auf die Patenterteilung: **09.10.2024**
(21) Anmeldenummer: 21714957.4
(22) Anmeldetag: 22.03.2021
(51) Int. Cl.: F03D 1/02, F03D 13/10, F03D 13/25, B63B 35/34, B63C 1/12

(54) **VERFAHREN ZUM ERRICHTEN EINER WINDENERGIEANLAGE MIT EINEM TURM UND ZWEI SICH VOM TURM ERSTRECKENDEN AUSLEGERN**
METHOD FOR ERECTING A WIND TURBINE WITH A TOWER AND TWO BOOMS EXTENDING FROM THE TOWER
PROCÉDÉ DE MONTAGE D'UNE ÉOLIENNE COMPRENANT UNE TOUR ET DEUX FLÈCHES S'ÉTENDANT À PARTIR DE LA TOUR

(30) Priorität: 25.03.2020 DE 102020108154
(43) Veröffentlichungstag der Anmeldung: 08.02.2023
(73) Patentinhaber: Aerodyn Consulting Singapore Pte Ltd, Singapore 048622 (SG)
(72) Erfinder: SIEGFRIEDSEN, Sönke, 24768 Rendsburg (DE)
(74) Vertreter: Lobemeier, Martin Landolf
(86) Internationale Anmeldenummer: PCT/IB2021/052352
(87) Internationale Veröffentlichungsnummer: WO 2021/191766

(56) Entgegenhaltungen:
- WO-A1-2012/175091
- DE-B3- 102012 020 052
- GB-A- 2 443 886

## Beschreibung

Die Erfindung betrifft ein Verfahren zum Errichten einer Windenergieanlage mit einem Turm und zwei sich vom Turm erstreckenden Auslegern mit jeweils einer am freien Ende eines Auslegers angeordneten, einen Rotor aufweisenden Energiewandlungseinheit.

Eine derartige auf einem schwimmenden Fundament angeordnete Windenergieanlage ist grundsätzlich aus der WO 2017/206976 A2 bekannt. Diese schwimmende Windenergieanlage, deren Gesamtleistung sich aus mehreren bereits erprobten und zugelassenen Einzelanlagen zusammensetzt und daher mit relativ geringem Zeit- und Arbeitsaufwand realisiert werden kann, nutzt das aus EP 3 019 740 B1 bekannte Y-förmige schwimmende Fundament, das sich in mehreren (unveröffentlichten) Tests sowohl hinsichtlich der Aufnahme von an der Energiewandlungseinheit auftretenden Lasten als auch hinsichtlich der Schwimmstabilität der gesamten Anlage unter Last als äußerst vorteilhaft erwiesen hat.

Das Fundament ist - wie aus der DE 10 2016 118 078 A1 bekannt - aus einer Mehrzahl von Betonelementen modular aufgebaut, wobei die einzelnen Betonelemente mithilfe der aus der WO 2019/234 488 A2 bekannten Gießform hergestellt werden und mittels des ebenfalls in dieser PCT-Anmeldung genannten Montagesystems montiert werden können.

Wenngleich Vorrichtungen zur Errichtung von Windenergieanlagen allgemein bekannt sind - siehe beispielsweise die als DE 10 2012 020 052 B3, GB 2 443 886 A und WO 2012/175091 A1 veröffentlichten Druckschriften -, besteht ein bislang praktisch noch nicht gelöstes Problem bei der Fertigung einer besonders bevorzugten Ausführung der aus der WO 2017/206976 A2 bekannten Windenergieanlage darin, dass die Anlage ihre Stabilität idealerweise erst durch die Verspannung des Fundaments mit den an den Auslegern angeordneten Energiewandlungseinheiten erhalten soll. Zur Einsparung von Material und damit Gewicht bedeutet dieses, dass die Ausleger bevorzugt so ausgelegt werden, dass diese allein, das heißt ohne Abspannung, nicht in der Lage sein werden, das hohe Gewicht der Energiewandlungseinheiten aufzunehmen.

Das vorliegend zu lösende Problem besteht also nicht darin, dass die aus der WO 2017/206976 A2 bekannte Windenergieanlage als solche nicht gefertigt werden könnte, sondern vielmehr darin, wie ein Fertigungsverfahren einer aus der WO 2017/206976 A2 bekannten Windenergieanlage ausgestaltet sein muss, damit eine besonders vorteilhafte Errichtung einer besonders vorteilhaften Windenergieanlage erfolgen kann.

Aufgabe der Erfindung ist es daher, ein Verfahren zum Errichten einer Windenergieanlage der eingangs genannten Art bereitzustellen.

Diese Aufgabe wird erfindungsgemäß durch das Verfahren mit den Merkmalen von Anspruch 1 gelöst. Die Unteransprüche geben vorteilhafte Ausgestaltungen der Erfindung wieder.

Das erfindungsgemäße Verfahren kann beispielsweise mit einer Vorrichtung zum Errichten einer Windenergieanlage mit einem schwimmenden Fundament, einem auf dem schwimmenden Fundament angeordneten Turm und zwei sich vom Turm erstreckenden Auslegern mit jeweils einer am freien Ende eines Auslegers angeordneten, einen Rotor aufweisenden Energiewandlungseinheit durchgeführt werden, die einen Hilfsturm mit einem mit einer Winde verbundenen Seilsystem zum Anheben der mittels der Ausleger mit dem Turm der Windenergieanlage verbundenen Energiewandlungseinheiten aufweist.

Die Vorrichtung ist insbesondere zum synchronen Anheben der mittels der Ausleger mit dem Turm der Windenergieanlage verbundenen Energiewandlungseinheiten eingerichtet. Speziell weist die Vorrichtung eine dem Hilfsturm benachbart angeordnete, das schwimmende Fundament aufnehmende Slipanlage auf, sodass das fertige Produkt einfach ausgeliefert werden kann.

Die Vorrichtung zum Errichten einer Windenergieanlage mit einem schwimmenden Fundament, einem auf dem schwimmenden Fundament angeordneten Turm und zwei sich vom Turm erstreckenden Auslegern mit jeweils einer am freien Ende eines Auslegers angeordneten, einen Rotor aufweisenden Energiewandlungseinheit sieht insbesondere einen ersten Ponton zur Aufnahme des schwimmenden Fundaments, zwei zweite Pontons zur Aufnahme jeweils einer Energiewandlungseinheit, wobei die zweiten Pontons auf sich gegenüberliegenden Seiten des ersten Pontons angeordnet sind, und einen mittig zu den zweiten Pontons angeordneten Hilfsturm mit einem mit einer Winde verbundenen Seilsystem zum Anheben der mittels der Ausleger mit dem Turm der Windenergieanlage verbundenen Energiewandlungseinheiten von den zweiten Pontons vor.

Unabhängig von einer Ausgestaltung mit bzw. ohne Slipanlage oder Pontons ist das mit der Winde verbundene Seilsystem des Hilfsturms speziell so ausgebildet, dass die sich am Turm abstützenden, insbesondere gelenkig mit dem Turm verbundenen Ausleger gleichzeitig um einen identischen Betrag angehoben werden, damit sich die auf den Hilfsturm wirkenden Eigengewichtsmomente der Ausleger und der Energiewandlungseinheiten aufgrund des synchronen Anhebens der Ausleger gegenseitig aufheben. Da also nahezu keine Biegemomente, sondern nur auf den Hilfsturm wirkende Druckkräfte auftreten, kann der Hilfsturm mit relativ geringem Materialaufwand gefertigt werden. Kommen mehrere Winden zum Einsatz, sind diese für ein synchrones Anheben der Ausleger aufeinander abzustimmen.

Sind Pontons vorgesehen, so sind diese insbesondere als Schwimmplattformen aus Beton und/oder Stahl ausgebildet und als wasserstandabhängige Träger zur Aufnahme von Komponenten der mittels der Vorrichtung zu errichtenden schwimmenden Windenergieanlage eingerichtet, wobei der erste Ponton insbesondere tauchfähig ausgestaltet ist - der erste Ponton ist funktional also als einfaches Schwimmdock ausgebildet. Hierfür weist der erste Ponton speziell eine Mehrzahl von Kammern auf, die mittels wenigstens einer Pumpe geflutet und entleert werden können und so den Auftrieb des ersten Pontons bestimmen. Speziell ist eine Steuerung zum Trimmen des ersten Pontons vorgesehen, die während des Produktionsablaufs der schwimmenden Windenergieanlage eine Stabilisierung des ersten Pontons in der Horizontalen bewirkt.

Der erste Ponton ist weiter speziell aus einer Mehrzahl von miteinander verbundenen Pontonelementen gebildet, die je nach Bedarf an die Form des schwimmenden Fundaments der mittels der Vorrichtung zu errichtenden Windenergieanlage angepasst sind. So weist der erste Ponton insbesondere wenigstens eine Förderstrecke zum Transportieren von das schwimmende Fundament aufbauenden Fundamentmodulen auf. Speziell sind drei sternförmig auf ein zentrales Verbindungsteil zulaufende Förderstrecken vorgesehen, mit denen das bekannte Y-förmige schwimmende Fundament der eingangs genannten Windenergieanlage in einfacher Weise montiert werden können.

Die Stirnseite des ersten Pontons und die Stirnseiten der zweiten Pontons sind insbesondere miteinander fluchtend ausgerichtet, wobei den ersten Ponton mit den zweiten Pontons verbindende Verbindungselemente vorgesehen sind. Nach einer weiteren Ausgestaltung sind diese Verbindungsmittel als einen vorbestimmten Abstand zwischen den Pontons bewirkende Abstandhalter ausgebildet, die sowohl mit dem ersten Ponton als auch mit den zweiten Pontons gelenkig verbunden sein können. Insbesondere weisen die zwischen den Pontons und dem Abstandhalter ausgebildeten Gelenke einen einzigen Freiheitsgrad auf und sind um eine in der Ebene der Pontons angeordnete Achse drehbar eingerichtet, sodass eine Bewegung der zweiten Pontons relativ zum ersten Ponton der Höhe nach, nicht aber in der Horizontalen ermöglicht ist.

Sofern Pontons vorgesehen sind, ist der Hilfsturm speziell auf dem ersten Ponton angeordnet, sodass dieser bei Absenken des ersten Pontons ebenfalls mit abgesenkt wird. Die Winde ist dabei insbesondere im Turm oder in dem vom ersten Ponton gebildeten Fundament des Hilfsturms angeordnet.

Die Vorrichtung kann nach einer alternativen Ausgestaltung eine im ersten Ponton gebildete Ausnehmung aufweisen, die den Hilfsturm wenigstens teilweise umgibt, wobei der erste Ponton entlang der Längsachse des Hilfsturms verschieblich angeordnet ist. Hierfür ist es erforderlich, den Hilfsturm auf den Boden des Hafenbeckens zu gründen.

Jedenfalls ist der Hilfsturm im Falle einer Ausbildung der Vorrichtung mit Pontons nicht nur mittig zu den zweiten Pontons, sondern speziell mittig zwischen den zweiten Pontons angeordnet.

In jedem Fall ist die Vorrichtung so auszulegen, dass die vom Hilfsturm zu den auf beiden Seiten des Hilfsturms angeordneten Auslegern geführten Seile in einer Flucht liegen, sodass die auf den Hilfsturm wirkenden Biegemomente weitgehend reduziert werden können. Mit anderen Worten ist die Vorrichtung zu auszulegen und im Verhältnis zu der zu errichtenden Windenergieanlage so anzuordnen, dass die an den Auslegern (oder an den Energiewandlungseinheiten) vorgesehenen Anschlagpunkte zur Verbindung der Ausleger mit dem Seilsystem und der Hilfsturm auf einer gedachten Gerade angeordnet sind.

Weiter ist ein im Hilfsturm angeordneter, mit der Winde kommunizierender Flaschenzug vorgesehen, der speziell einen entlang der Längsachse des Hilfsturms verschieblich eingerichteten Block aufweist, der mit dem Seilsystem zum Anheben der mittels der Ausleger mit dem Turm der Windenergieanlage verbundenen Energiewandlungseinheiten verbunden ist. Insbesondere ist der verschieblich eingerichtete Block mittels eines Hebezeugs verschieblich eingerichtet, sodass dieser nach Ausführen eines Hebevorgangs wieder in seine Ausgangsposition angehoben werden kann.

Schließlich ist der Hilfsturm speziell als ein einen Kranausleger aufweisender Kran ausgebildet, mit dem die die Windenergieanlagen aufbauenden Komponenten an den Ort ihrer Verwendung transportiert werden können. Dabei ist der Kranausleger insbesondere um den Hilfsturm drehbar eingerichtet, wobei, wenn die Vorrichtung mit Pontons ausgestaltet ist, der erste Ponton im Schwenkbereich des Kranauslegers angeordnet ist.

Speziell weist der Hilfsturm einen Kranausleger auf, an dem eine entlang des Kranauslegers verfahrbare, mit einem Hebezeug ausgestattete Laufkatze vorgesehen ist, wobei der Kranausleger insbesondere um 360° um die Längsachse des Hilfsturms drehbar eingerichtet ist. Der Hilfsturm dient somit einerseits zum Lastentransport der die Windenergieanlage bildenden Komponenten an Land oder gegebenenfalls zwischen dem Festland und den vorgesehenen Pontons. Andererseits ist der Hilfsturm mit einem eine Winde aufweisenden Seilsystem ausgestattet, das zum Anheben der mittels der Ausleger mit dem Turm der Windenergieanlage verbundenen Energiewandlungseinheiten (gegebenenfalls von den zweiten Pontons) benötigt wird. Diese Ausgestaltung gewährleistet, dass jede Position des zu erstellenden schwimmenden Fundaments der zu errichtenden Windenergieanlage von der am Kranausleger verfahrbar eingerichteten Laufkatze des mittig installierten Hilfsturms erreicht werden kann, ohne dass grundsätzlich weitere Transportmittel benötigt werden.

Des Weiteren kann ein Hafen mit einem Kai und einer am Kai schwimmend befestigten Vorrichtung vorgesehen sein. Vorliegend wird als Hafen ein Bereich an einer Meeresküste oder am Ufer eines Flusslaufes verstanden, an dem Schiffe anlegen können. Ein Solcher Hafen besteht insbesondere aus wenigstens einem Hafenbecken sowie wenigstens einem Kai, also einem durch Mauern befestigten Ufer, wobei das Ufer vor der Kaimauer so tief ist, dass Schiffe am Kai festmachen können. Falls sich dieses aufgrund örtlicher Gegebenheiten als vorteilhaft erweist, kann der Hafen auch eine Mole aufweisen bzw. teilweise von einer Mole umgeben sein. Jedenfalls ist der Hafen so einzurichten, dass der Kai für die Vorrichtung frei zugänglich ist und die mittels der Vorrichtung fertiggestellte Windenergieanlage mittels wenigstens einem Schlepper aus dem Hafen ausgeschleppt und zum Ort ihrer Installation verbracht werden kann.

Der Hafen erstreckt sich insbesondere wasserseitig entlang eines geradlinig angelegten Kais, dessen Länge etwas größer als der doppelte Rotordurchmesser eines einzelnen Rotors der zu fertigenden Windenergieanlage ist. Bei einem einfachen Rotordurchmesser von 200 m wird der Kai entsprechend über eine Länge von annähernd 500 m geradlinig ausgebildet sein. Die Wassertiefe des Hafens ist so zu bemessen, dass die zu fertigende Windenergieanlage aus dem Hafen geschleppt werden kann und beträgt vorteilhaft wenigstens 8 bis 10 m, wobei gegebenenfalls der Tidenhub zu berücksichtigen ist.

Die Vorrichtung kann im Hafen selbst oder in einem dem Hafen benachbarten Dock gefertigt, in Einzelteilen in den Hafen geschleppt und dort montiert sein.

Eine vorteilhafte Ausgestaltung weist der Hafen auf, wenn dieser bei Ausbildung der Vorrichtung mit Pontons eine am Kai angeordnete, mit einer auf dem ersten Ponton angeordneten Förderstrecke kommunizierende zweite Förderstrecke aufweist. Dieses ermöglicht das problemlose Fördern von Fundamentelementen vom Hafen unmittelbar auf den ersten Ponton, ohne dass weitere Hilfsmittel benötigt werden.

Das erfindungsgemäß ausgestaltete Verfahren zum Errichten einer Windenergieanlage mit einem schwimmenden Fundament, einem auf dem schwimmenden Fundament angeordneten Turm und zwei sich vom Turm erstreckenden Auslegern mit jeweils einer am freien Ende eines Auslegers angeordneten, einen Rotor aufweisenden Energiewandlungseinheit sieht in einem ersten Schritt das Erstellen eines schwimmenden Fundaments mit einem darauf angeordneten Turm vor. Darauf wird wenigstens eine am Turm angeordnete Stütze zur Aufnahme jeweils eines Endes der Ausleger, die gegebenenfalls mit jeweils einer Energiewandlungseinheit vormontiert sind, eingerichtet. Die Stütze, die entweder zwischenzeitlich am Turm montiert und nach deren Verwendung demontiert werden kann oder als integraler Bestandteil des Turms ausgebildet ist, wird im Folgenden auch als Turmkonnektor bezeichnet und ist insbesondere als Gelenk ausgebildet, das den Turm mit den Auslegern gelenkig verbindet. Im Anschluss wird jeweils ein Ende der Ausleger auf der Stütze und das jeweils andere Ende der Ausleger auf Höhe des Turmfußes angeordnet. Das jeweils auf Höhe des Turmfußes gelagerte andere Ende der Ausleger wird zur Errichtung der Anlage unter gleichzeitigem Verschwenken der Ausleger mit der wenigstens einen als Auflager wirkenden Stütze bis zum Erreichen einer vorbestimmten Höhe angehoben, worauf die einen Enden der verschwenkten Ausleger am Turm fixiert, d.h. mit diesem fest verbunden werden, wobei zwischen den anderen Enden der verschwenkten Ausleger oder zwischen den Energiewandlungseinheiten eine Abspannung mittels wenigstens eines Abspannungsseils ausgebildet wird.

Das Anheben der Ausleger erfolgt bevorzugt derart, dass die Ausleger synchron um jeweils einen identischen Betrag angehoben werden. Aufgrund des synchronisierten Anhebens der Ausleger heben sich die auf den Hilfsturm wirkenden Eigengewichtsmomente der Ausleger und der Energiewandlungseinheiten auf, sodass der Hilfsturm, da nahezu keine Biegemomente, sondern nur auf den Hilfsturm wirkende Druckkräfte auftreten, nicht besonders massiv ausgelegt werden muss.

Sollte der Rotor der Energiewandlungseinheiten nicht von vornherein an den Auslegern montiert worden sein, so ist bevorzugt vorgesehen, die Rotoren nach Verschwenken der Ausleger und deren Befestigen am Turm und Abspannen miteinander an den Energiewandlungseinheiten zu befestigen.

Grundsätzlich ergeben sich für die Montage des Rotors abhängig von der verwendeten Blattzahl folgende Möglichkeiten: soll die schwimmende Windenergieanlage mit zwei Zweiblattrotoren ausgestattet werden, ist es vorteilhaft, die Rotoren vor dem Anheben der Ausleger an den Energiewandlungseinheiten zu montieren, wobei die Zweiblattrotoren dabei so angeordnet werden, dass sich die Blätter der Rotoren horizontal erstrecken. Alternativ können die Zweiblattrotoren auch nach dem Anheben der Ausleger an den Energiewandlungseinheiten befestigt werden.

Sind hingegen Dreiblattrotoren vorgesehen, werden die Rotoren mit ihren drei Blättern bevorzugt liegend in einer horizontalen Ebene montiert, insgesamt angehoben, um 90° geschwenkt und an den bereits angehobenen Energiewandlungseinheiten befestigt. Alternativ können auch mit nur zwei der drei Blätter vormontierte Rotoren vor dem Anheben der Ausleger an den Energiewandlungseinheiten befestigt werden, wobei das jeweils dritte Blatt nach Anheben der Ausleger befestigt wird.

Zur Ausführung des erfindungsgemäßen Verfahrens wird besonders bevorzugt eine der zuvor dargestellten Vorrichtungen genutzt.

Das erfindungsgemäße Verfahren wird im Folgenden anhand von der beigefügten Zeichnungen näher erläutert. Es zeigen:
- Fig. 1: einen besonders ausgestalteten Hafen während eines ersten Produktionsschritts zum Errichten einer schwimmenden Windenergieanlage, die zwei mit einem Turm verbundene Ausleger aufweist, an deren Ende jeweils eine einen Rotor aufweisende Energiewandlungseinheit angeordnet ist;
- Fig. 2: den zuvor dargestellten Hafen während eines zweiten Produktionsschritts bei nahezu vollständig fertig gestelltem Fundament;
- Fig. 3: den zuvor dargestellten Hafen während eines dritten Produktionsschritts während des Anbringens der Schwimmkörper am schwimmenden Fundament;
- Fig. 4: den zuvor dargestellten Hafen während eines vierten Produktionsschritts nach Anbindung der Schwimmkörper am Fundament;
- Fig. 5: den zuvor dargestellten Hafen während eines fünften Produktionsschritts bei der Vorbereitung zur Anbindung der beiden Ausleger an den Turm;
- Fig. 6: den zuvor dargestellten Hafen während eines sechsten Produktionsschritts an den Turm angebundenen Auslegern;
- Fig. 7: den zuvor dargestellten Hafen während eines siebten Produktionsschritts nach der Anbindung der für die Errichtung notwendigen Hilfsseile an den Auslegern;
- Fig. 8: den zuvor dargestellten Hafen während eines achten Produktionsschritts nach Anbindung der für die Abspannung der Ausleger miteinander vorgesehenen Abspannungsseile;
- Fig. 9: den zuvor dargestellten Hafen während eines neunten Produktionsschritts während des Anhebens der Energiewandlungseinheiten;
- Fig. 10: den zuvor dargestellten Hafen während eines zehnten Produktionsschritts mit vollständig angehobenen Energiewandlungseinheiten;
- Fig. 11: den zuvor dargestellten Hafen nach Fertigstellung der schwimmenden Windenergieanlage mit abgesenktem ersten Ponton;
- Fig. 12: die fertig gestellte schwimmende Windenergieanlage beim Ausschleppen der Anlage aus dem Hafen;
- Fig. 13: eine teilweise geschnittene Ansicht einer besonders ausgestalteten Vorrichtung zum Errichten der zuvor dargestellten schwimmenden Windenergieanlage mit zwei mit einem Turm verbundenen Auslegern, an deren Ende jeweils eine einen Rotor aufweisende Energiewandlungseinheit angeordnet ist; und
- Fig. 14: einen weiteren besonders ausgestalteten Hafen nach Fertigstellung einer besonders ausgestalteten schwimmenden Windenergieanlage beim Ausschleppen der Anlage aus dem Hafen.

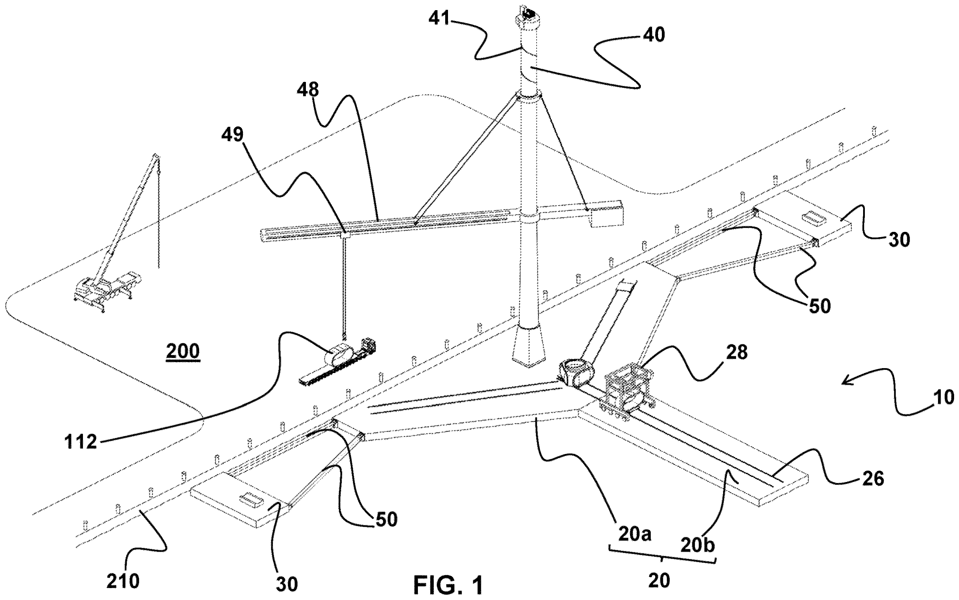

Fig. 1 zeigt einen besonders ausgestalteten Hafen während eines ersten Produktionsschritts zum Errichten einer schwimmenden Windenergieanlage, die zwei mit einem Turm verbundene Ausleger aufweist, an deren Ende jeweils eine einen Rotor aufweisende Energiewandlungseinheit angeordnet ist.

Der Hafen 200 weist eine befestigte Fläche auf, die insbesondere befahrbar ausgestaltet und zur Lagerung von Komponenten der zu fertigenden Windenergieanlage eingerichtet ist. So können Straßen einschließlich Fahrbahnmarkierungen vorgesehen sein, die den Verkehrsfluss regeln, aber auch Gebäude, die der Verwaltung des Hafens oder der vor Umwelteinflüssen geschützten Lagerung von Windenergieanlagenkomponenten dienen können (nicht dargestellt). Der Hafen 200 erstreckt sich wasserseitig entlang eines geradlinig angelegten Kais 210, dessen Länge etwas größer als der doppelte Rotordurchmesser eines einzelnen Rotors der zu fertigenden Windenergieanlage ist. Bei einem einfachen Rotordurchmesser von 200 m wird der Kai 210 entsprechend über eine Länge von annähernd 500 m geradlinig ausgebildet sein. Die Wassertiefe des Hafens 200 ist so zu bemessen, dass eine mittels der Vorrichtung fertiggestellte Windenergieanlage im Hafen 200 abgesenkt und aus dem Hafen 200 geschleppt werden kann. Die Wassertiefe des Hafens 200 beträgt somit unter Berücksichtigung der Höhe des ersten Pontons, auf dem die fertiggestellte Windenergieanlage angeordnet ist, und dem Tiefgang der schwimmenden Windenergieanlage vorteilhaft wenigstens 10 bis 15 m, wobei gegebenenfalls zusätzlich der Tidenhub im Hafen 200 zu berücksichtigen ist.

Dem Kai 210 vorgelagert und sich im Wesentlichen parallel zur Kaimauer des Hafens 200 erstreckend, ist eine Vorrichtung 10 zum Errichten einer Windenergieanlage mit einem schwimmenden Fundament, einem auf dem schwimmenden Fundament angeordneten Turm und zwei sich vom Turm erstreckenden Auslegern mit jeweils einer am freien Ende eines Auslegers angeordneten, einen Rotor aufweisenden Energiewandlungseinheit angeordnet. Der besondere Aufbau der mit Hilfe der Vorrichtung zu errichtenden Windenergieanlage wird im Folgenden durch Erläuterung der einzelnen bevorzugten Produktionsschritte deutlich.

Die hierfür verwendete Vorrichtung 10 weist jedenfalls einen ersten Ponton 20 zur Aufnahme des schwimmenden Fundaments der Windenergieanlage, zwei zweite Pontons zur Aufnahme jeweils einer Energiewandlungseinheit der Windenergieanlage, die auf sich gegenüberliegenden Seiten des ersten Pontons 20 angeordnet sind, und einen mittig zu den zweiten Pontons 30 angeordneten Hilfsturm 40 auf. Insbesondere ist der Hilfsturm 40 im gezeigten Beispiel auf dem ersten Ponton 20 angeordnet und speziell als ein Kran ausgebildet. Der Hilfsturm 40 weist hierfür einen Kranausleger 48 auf, an dem eine entlang des Kranauslegers 48 verfahrbare, mit einem Hebezeug ausgestattete Laufkatze 49 vorgesehen ist, wobei der Kranausleger 48 um 360° um die Längsachse des Hilfsturms 40 drehbar eingerichtet ist. Der Hilfsturm 40 dient somit einerseits zum Lastentransport der die Windenergieanlage bildenden Komponenten zwischen dem Festland und den Pontons 20, 30. Andererseits ist der Hilfsturm - wie im Folgenden gezeigt wird - mit einem eine Winde aufweisenden Seilsystem ausgestattet, das zum Anheben der mittels der Ausleger mit dem Turm der Windenergieanlage verbundenen Energiewandlungseinheiten von den zweiten Pontons benötigt wird.

Der Hilfsturm 40 ist auf dem ersten Ponton 20 mittig und in einer Ebene mit den zweiten Pontons 30 angeordnet. Insbesondere ist der Hilfsturm 40 in der Längsachse des sich senkrecht zum Kai 210 erstreckenden zweiten Pontonelements 20b angeordnet. Weiter ist zur Stabilisierung des Hilfsturms 40 wenigstens abschnittsweise eine Scruton-Wendel 41 vorgesehen, die vom den Hilfsturm 40 umströmenden Wind verursachte Schwingungen des Turms 40 verringert. Dieses ist insbesondere für den dargestellten Fall, in dem der Turm 40 auf dem ersten Ponton 20 angeordnet ist, vorteilhaft.

Der erste Ponton 20 ist zweiteilig ausgestaltet und folgt im Wesentlichen der Form des zu erstellenden schwimmenden Fundaments der schwimmenden Windenergieanlage. Insbesondere erstreckt sich ein erstes Pontonelement 20a parallel zum Kai 210 und ein zweites Pontonelement 20b senkrecht zum Kai 210, wobei das erste Pontonelement 20a und das zweite Pontonelement 20b nach deren Fertigung, die auch im für die Errichtung der Windenergieanlage eingerichteten Hafen vorgenommen werden kann, und deren relativen Positionierung zueinander so miteinander verbunden werden, dass eine Relativbewegung zwischen diesen Elementen unterbunden ist.

Der erste Ponton 20, genauer das erste Pontonelement 20a ist auf seinen beiden sich senkrecht vom Kai 210 erstreckenden Seiten mit Hilfe von jeweils zwei Abstandselementen 50 jeweils mit einem der zweiten Pontons 30 verbunden. Die Abstandselemente 50 sind dabei sowohl mit dem ersten Ponton 20 als auch mit den zweiten Pontons 30 gelenkig verbunden, wobei die Gelenke einen Freiheitsgrad aufweisen und jeweils um eine Achse sich senkrecht vom Kai 210 erstreckende Achse drehbar eingerichtet sind. Diese erlaubt eine Beweglichkeit der zweiten Pontons 30 relativ zum ersten Ponton 20 der Höhe nach, also in der Vertikalen, beispielsweise zur Anpassung an den Wellengang, nicht jedoch in deren relativen Position in der Horizontalen. So ist gewährleistet, dass die dem Kai 210 zugewandten Seiten des ersten Pontons 20 und der zweiten Pontons 30 stets in einer Flucht liegen und mit dem Kai 210 abschließen können.

Der erste Ponton 20, der zur alleinigen Aufnahme der nach Produktion fertiggestellten Windenergieanlage eingerichtet ist, weist drei sternförmig auf ein zentrales Verbindungsteil zulaufende Förderstrecken 26 auf, die sich als vorteilhaft bei der Herstellung des schwimmenden Fundaments der Windenergieanlage erwiesen haben. Hierfür werden einzelne, das schwimmende Fundament bildende Fundamentmodule 112 in einem dafür eingerichteten Werk gefertigt und zum Hafen 200 transportiert. Der als Kran eingerichtete Hilfsturm 40 hebt die Fundamentmodule 112 auf die auf dem ersten Ponton 20 eingerichtete Förderstrecke 26, auf der die einzelnen Fundamentmodule 112 auf einem Rollenförderer an ihre vorgesehen Position geschoben werden können. Hierfür können auch - wie in Fig. 1 gezeigt - mit einem Hebezeug ausgestattete Fahrwagen (Carrier, Portalhubwagen, Rubber Tyre Gantry (RTG) Kran etc.) 28 verwendet werden.

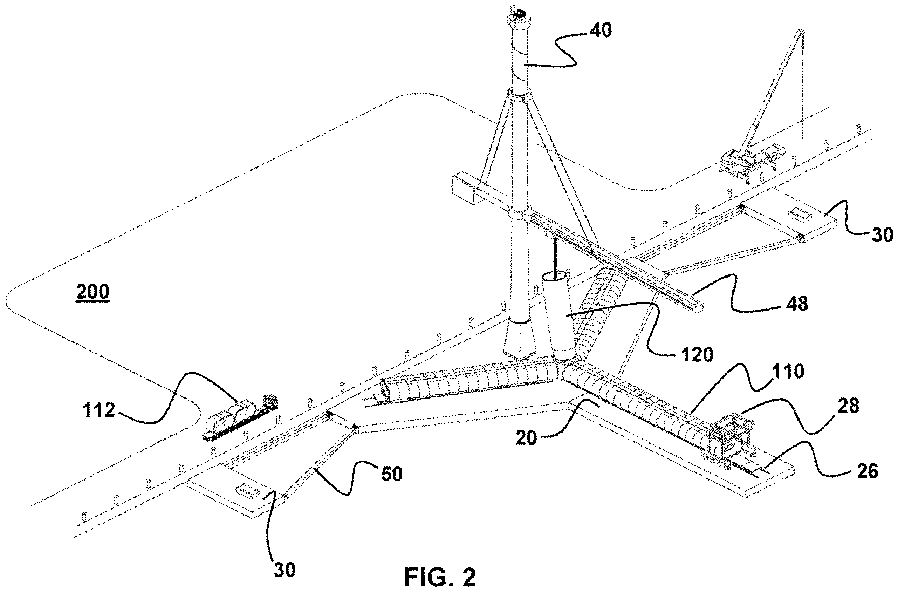

Sind die einzelnen Komponenten der zu fertigenden Windenergieanlage in einem ersten Produktionsschritt bereitgestellt, ist jedenfalls in einem zweiten Produktionsschritt zunächst das schwimmende Fundament der Windenergieanlage zu erstellen. Fig. 2 zeigt den zuvor dargestellten Hafen 200 während eines zweiten Produktionsschritts bei nahezu vollständig fertig gestelltem Fundament 110. Das Fundament 110 zeigt die charakteristische, aus einzelnen Fundamentelementen 112 gefertigte Y-förmige Struktur, auf deren die einzelnen Arme des Schwimmfundaments 110 verbindenden zentralen Verbindungsteil bereits mit Hilfe des als Kran ausgebildeten Hilfsturms 40 der Turm 120 der zu errichtenden Windenergieanlage angeordnet ist.

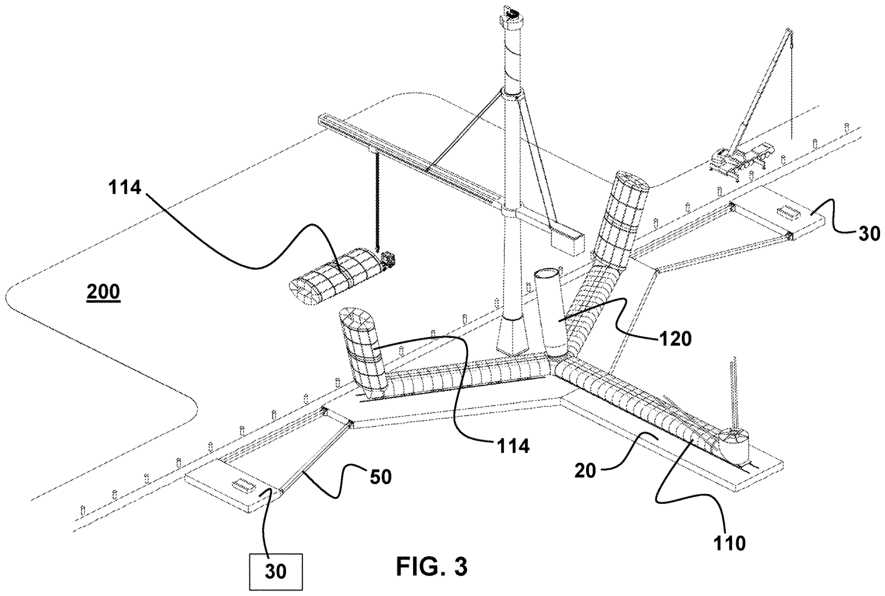

Sodann werden in dem in Fig. 3 dargestellten dritten Produktionsschritt die Schwimmkörper 114 am schwimmenden Fundament 110 befestigt. Um dieses auf einfache Weise bewerkstelligen zu können, ist der erste Ponton 20 nahezu vollständig im Schwenkbereich des Kranauslegers 48 angeordnet, sodass jede Position des schwimmenden Fundaments 110 von der am Kranausleger 48 verfahrbar eingerichteten Laufkatze 49 erreicht werden kann. Dabei ist der Kranausleger 48 des als Hilfsturm 40 ausgebildeten Krans auf einer Höhe angeordnet, die die Höhe des schwimmenden Fundaments 110, einschließlich der auf dem schwimmenden Fundament 110 angeordneten Schwimmkörper 114 und dem auf dem schwimmenden Fundament 110 angeordneten Turm 120, übersteigt - der am Hilfsturm 40 drehbar eingerichtete Kranausleger 48 kann in diesem Stadium der Errichtung also ungehindert um die Achse des Hilfsturms 40 gedreht werden.

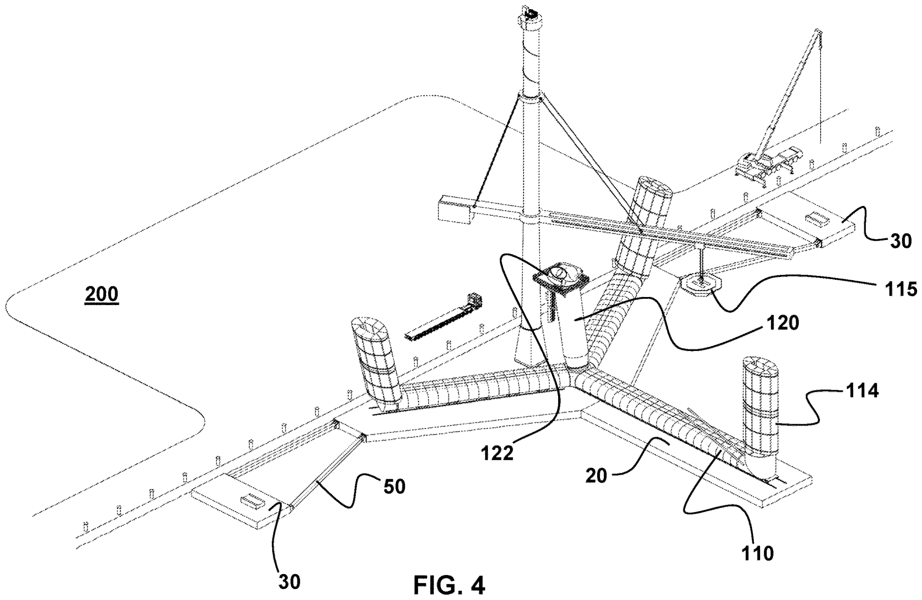

Dieses trifft auch auf den in Fig. 4 gezeigten vierten Produktionsschritt nach Anbindung der Schwimmkörper 114 am schwimmenden Fundament 110 zu. Zusätzlich zu der auf dem am langen Arm des Schwimmfundaments 110 angeordneten Schwimmkörper 114 anzubringenden Hubschrauberlandeplattform 115 ist zu erkennen, dass das freie Ende des Turms 120 der zu errichtenden Windenergieanlage zur Aufnahme der Ausleger vorbereitet worden ist. Insbesondere ist zu erkennen, dass das freie Ende des Turms 120 oberhalb einer als Anleger für Schiffe ausgebildeten Plattform mit einer im Folgenden als Turmkonnektor bezeichneten Stütze 122 ausgestattet ist, die als Lager für das an den Turm 120 anzubindende Ende der Ausleger ausgebildet ist. Insbesondere ist die die Stütze 122 als Gelenk ausgebildet, sodass die Ausleger gelenkig mit dem Turm 120 verbunden werden können.

Alternativ zum gezeigten Ablauf ist es auch denkbar, dass das schwimmende Fundament 110 an einem anderen Ort gefertigt, zu Wasser gelassen und zum gezeigten Hafen 200 geschleppt wird. Insbesondere ist es denkbar, dass das schwimmende Fundament 110 auf einem ersten Ponton 20 gefertigt wird, der erst nach Fertigstellung des schwimmenden Fundaments 110 mit den zweiten Pontons 30 verbunden wird.

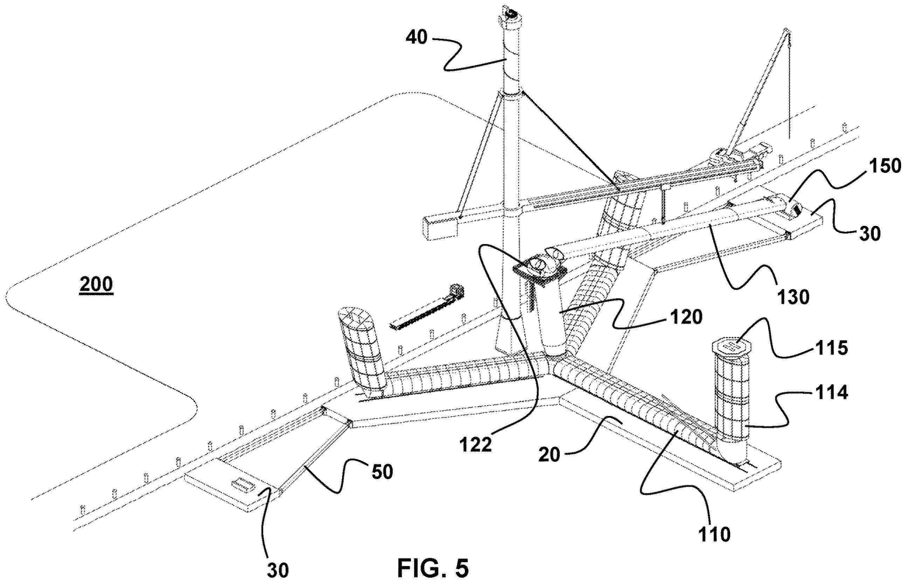

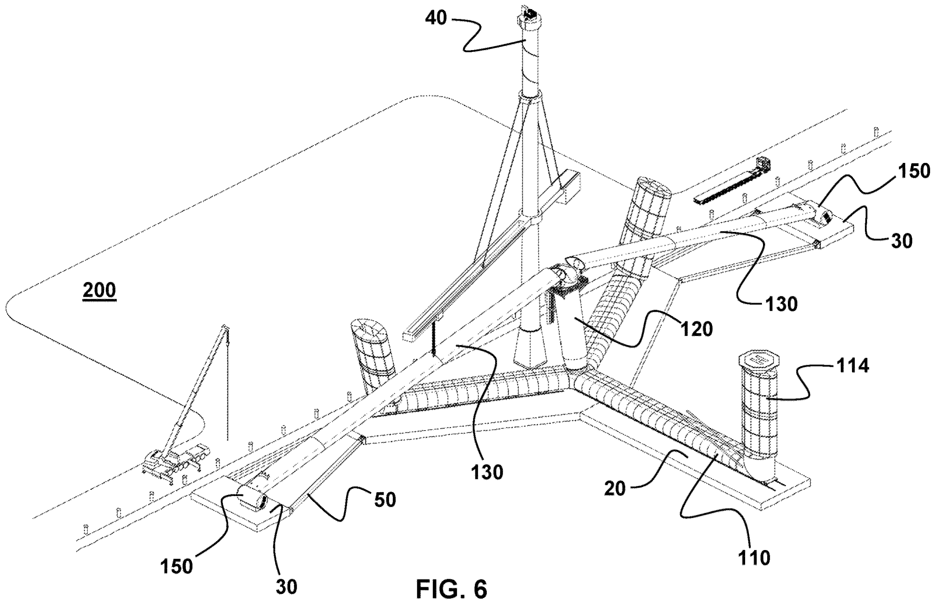

Die beiden vom Turm 120 zu tragenden Ausleger 130 werden - wie Fig. 5 während eines fünften Produktionsschritts bei der Vorbereitung zur Anbindung der beiden Ausleger 130 an den Turm 120 mittels des Turmkonnektors 122 und Fig. 6 während eines sechsten Produktionsschritts mittels des Turmkonnektors 122 an den Turm 120 angebundenen Auslegern 130 zeigen - mit Hilfe des als Kran ausgestalteten Hilfsturms 40 so platziert, das das eine Ende des jeweiligen Auslegers 130 auf oder an dem freien Ende des Turms 120 und das andere Ende des jeweiligen Auslegers 130, an dem bereits jeweils eine Energiewandlungseinheit 150 vormontiert ist, auf je einem der beiden zweiten Pontons 30 lagert. Durch die den ersten Ponton 20 mit den zweiten Pontons 30 verbindenden Abstandhalter 50, deren Gelenke eine horizontale Verschiebung der Pontons 20, 30 untereinander unterbinden, ist eine sichere Lagerung der beiden Ausleger 130 auf den beiden zweiten Pontons 30 und dem Turm 120 der zu errichtenden Windenergieanlage gewährleistet.

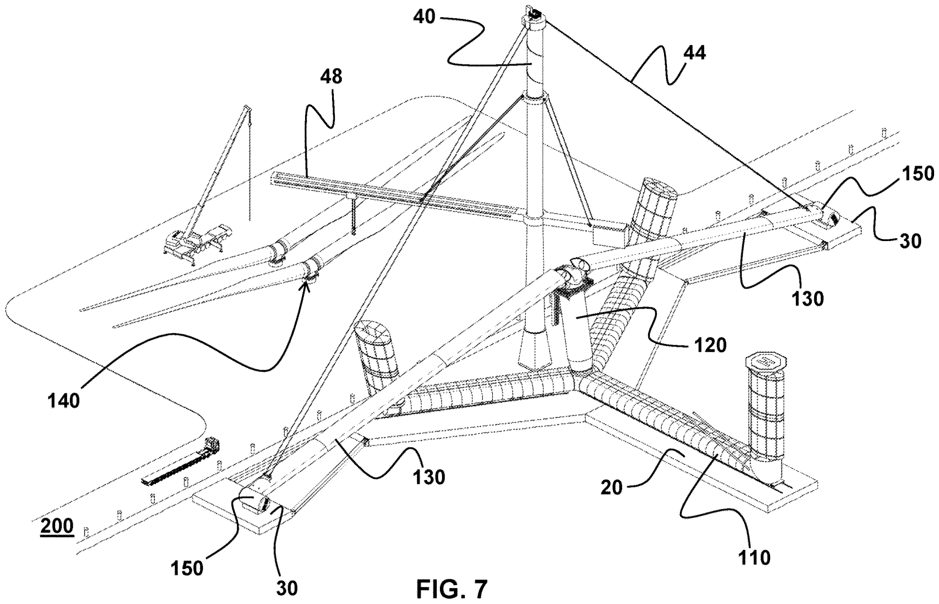

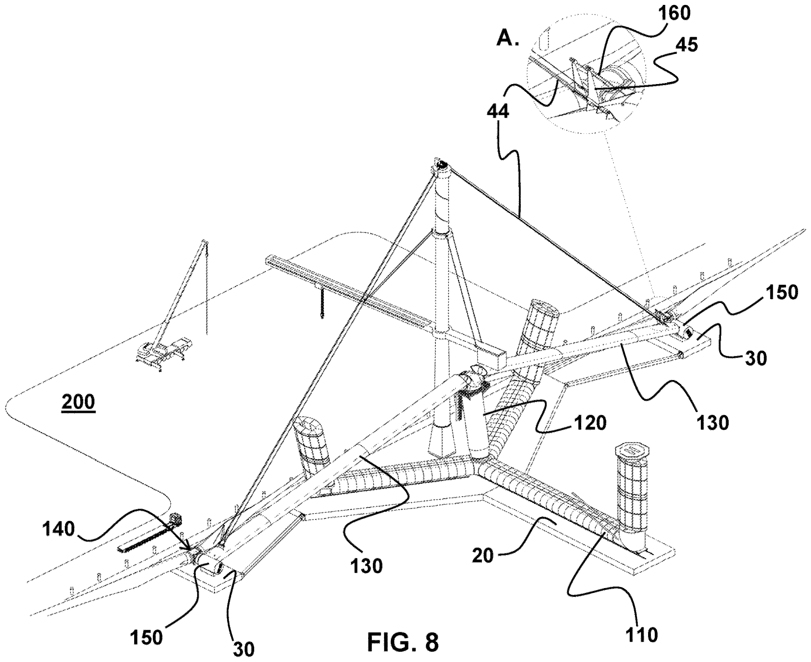

Beide Ausleger 130 sind mit ihrem einen Ende mittels des Turmkonnektors 122 mit dem Turm 120 oder am Turm 120 gelenkig gelagert, sodass diese um eine im Wesentlichen horizontale Achse verschwenkt und so bis zu einem gewünschten Grad aufgerichtet werden können. Hierfür wird, wie Fig. 7 zeigt, das im Hilfsturm 40 vorgehaltene Seilsystem 44 auf der Oberseite des Hilfsturms 40 mittels (nicht dargestellten) Umlenkrollen aus dem Hilfsturm 40 herausgeführt und mit den Auslegern 130 im Bereich der an die Ausleger 130 angebundenen Energiewandlungseinheiten 150 verbunden. Zugleich werden die beiden als Zweiblattrotoren ausgebildeten Rotoren 140 in vormontiertem Zustand bereitgestellt und, wie Fig. 8 zeigt, an den Energiewandlungseinheiten 150 montiert.

Insbesondere zeigt Fig. 8 in der Detailansicht (A) einen am Seilsystem 44 angeordneten Schlitten 45, der am Seilsystem 44 verschieblich gelagert ist und mit diesem unter Einnahme einer relativ gesehen ortsfesten Position am Seilsystem 44 mit diesem fest verbunden werden kann. Am Schlitten 45 sind zu beiden Seiten des Hilfsturms 40 jeweils Abspannungsseile 160 der für die zwischen den beiden Energiewandlungseinheiten 150 der Ausleger 130 vorgesehenen Abspannung vorgesehen, die - wie im Folgenden gezeigt wird - beim Anheben der Ausleger 130 im Bereich des Hilfsturms 40 zusammengeführt und dort miteinander verbunden werden.

Nachdem auch weitere für die Abspannung der Komponenten der Windenergieanlage benötigten Abspannungsseile 160, die die Energiewandlungseinheiten 50 nicht nur miteinander, sondern jeweils mit zwei der Arme des schwimmenden Fundaments 110 stabilisierend verbinden werden, vorbereitend mit diesen Komponenten verbunden sind, werden die Ausleger 130 mit den daran befestigten Energiewandlungseinheiten 150 einschließlich Rotor 140 unter Verschwenken um die am Turm 120 oder vom Turm 120 gebildeten Achsen von den zweiten Pontons 30 angehoben.

Alternativ ist es auch - wie oben genannt - möglich, die Ausleger 130 anzuheben, ohne dass an diesen die Rotoren 140 befestigt wären. Hierfür müssten die Rotoren 140 allerdings nach dem Aufrichten der Ausleger 130 mittels eines weiteren Krans (nicht dargestellt) angehoben und an den Energiewandlungseinheiten 150 befestigt werden.

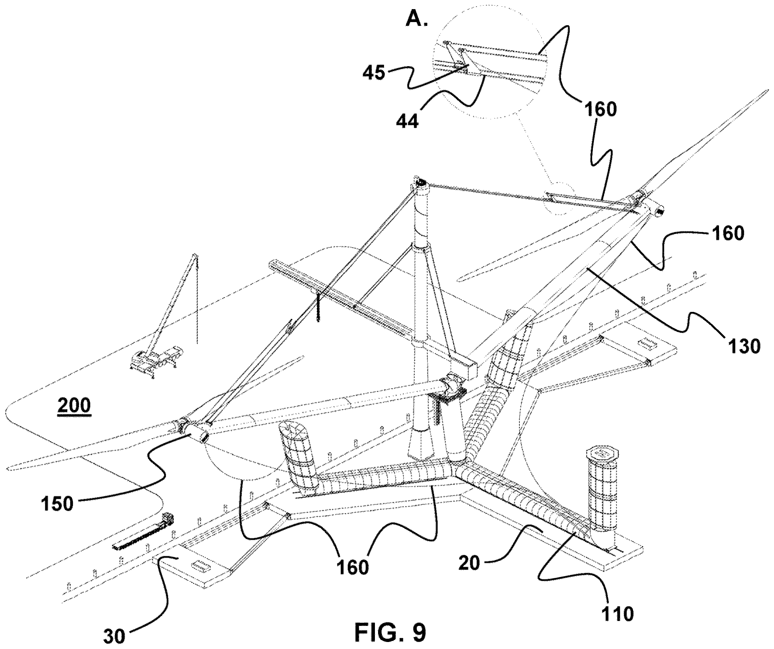

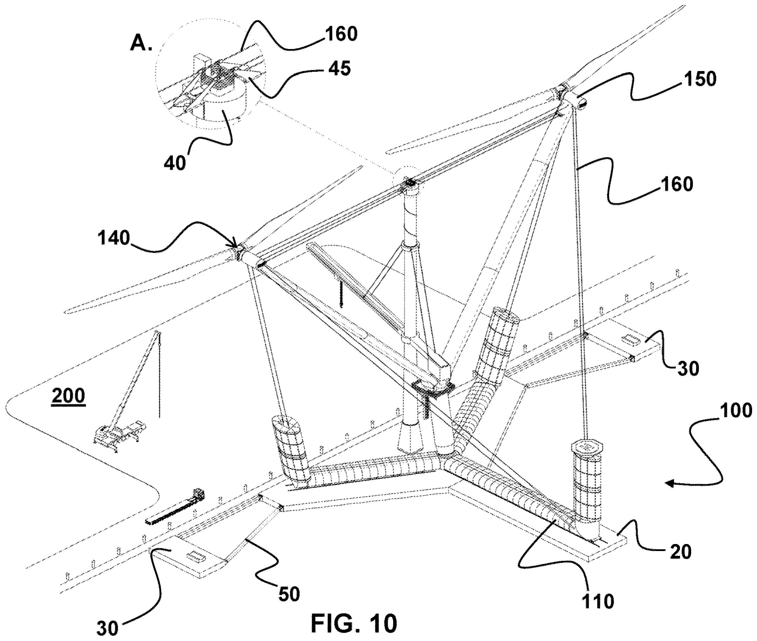

Fig. 9 zeigt die etwas über die Horizontale hinaus angehobenen Ausleger 130. Zuvor wurden die Schlitten 45 am Seilsystem 44 näher in Richtung des Turms 45 gezogen und an dem Seilsystem 44 fixiert (vgl. Detailansicht (A)), sodass die Schlitten 45 bei weiterem Anheben der Ausleger 130 - wie Fig. 10 zeigt - weiter zusammengezogen und zueinander benachbart zu liegen kommen. Von der aus der Detailansicht (A) ersichtlichen auf dem Hilfsturm 40 angeordneten Arbeitsplattform aus werden die Enden der jeweils mit im Bereich der Energiewandlungseinheiten 150 angeschlagenen Abspannungsseile 160 miteinander verbunden, sodass die Energiewandlungseinheiten 150 vom Turm 120 gestützt und durch die Abspannungsseile 160 gegenseitig getragen werden. Auch die übrigen Abspannungsseile 160 werden auf einen bestimmten Betrag vorgespannt, sodass die Abspannung der Windenergieanlage 100 insgesamt eine vorbestimmte Vorspannung erhält. Insbesondere sind die Abspannungsseile 160 so hoch vorgespannt, dass bei jedem anzunehmenden Lastfall keines der Abspannungsseile 160 soweit entlastet, dass dieses seine Vorspannung vollständig verlieren würde. Die hierfür notwendigen Spann- und Messeinrichtungen zum Einstellen der Vorspannung der Abspannungsseile 160 sind aus Gründen der Übersichtlichkeit nicht dargestellt.

Nach Fertigstellung der schwimmenden Windenergieanlage 100 und gegebenenfalls einer Überprüfung einzelner Komponenten wird der in Fig. 10 gezeigte Zustand erreicht, in dem die gemäß der vorherigen Schritte fertiggestellte schwimmende Windenergieanlage 100 nun vollständig auf dem ersten Ponton 20 lastet.

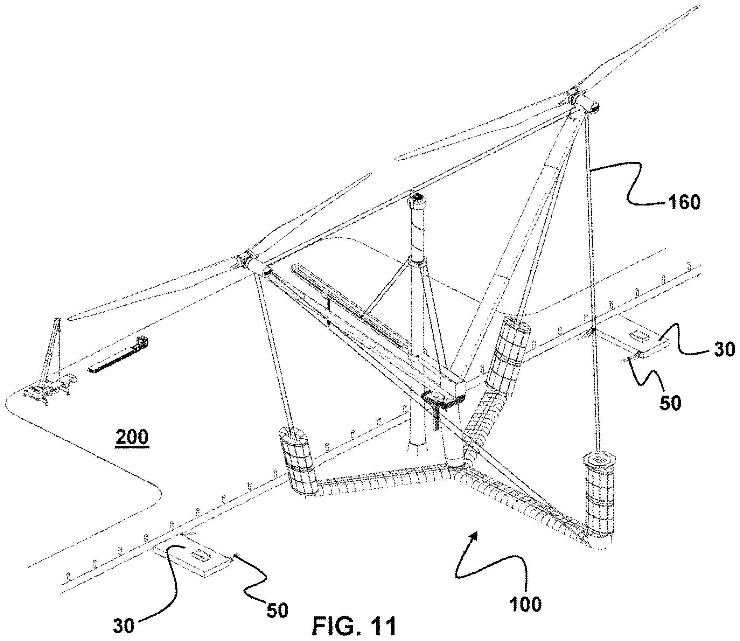

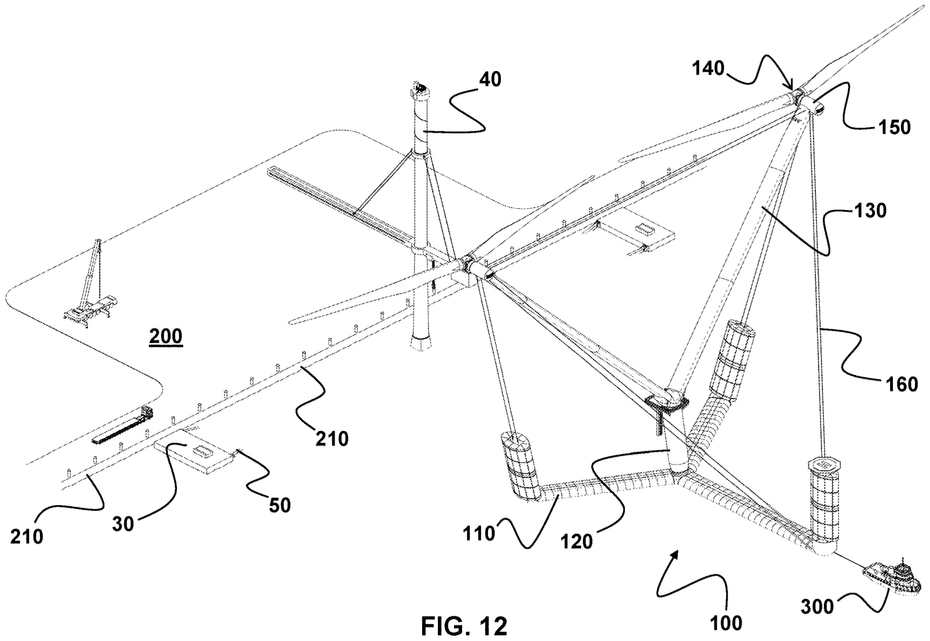

Zur Auslieferung der schwimmenden Windenergieanlage 100 wird der erste Ponton 20 geflutet, sodass der erste Ponton 20 und die schwimmende Windenergieanlage 100 gemeinsam so weit abgesenkt werden bis die schwimmende Windenergieanlage 100, wie in Fig. 11 dargestellt, ohne Unterstützung des ersten Pontons 20 selbständig schwimmt. Darauf kann die schwimmende Windenergieanlage 100, wie Fig. 12 zeigt, mittels eines Schleppers 300 aus dem Hafen 200 geschleppt und an den Ort der Installation geschleppt werden.

Die mit dem ersten Ponton 20 gelenkig verbundenen zweiten Pontons 30 verbleiben dabei an der Wasseroberfläche und stabilisieren den gefluteten ersten Ponton 20 zu beiden Seiten. Dabei erfolgt aufgrund der starren Anbindung der zweiten Pontons 30 am ersten Ponton 20 ein horizontaler Versatz der zweiten Pontons 30 in Richtung des ersten Pontons 20. Nach dem Entleeren des ersten Pontons 20 taucht dieser wieder an die Wasseroberfläche auf, wobei die zweiten Pontons 30 an ihre Ausgangsposition entlang des Kais 210 verschoben werden.

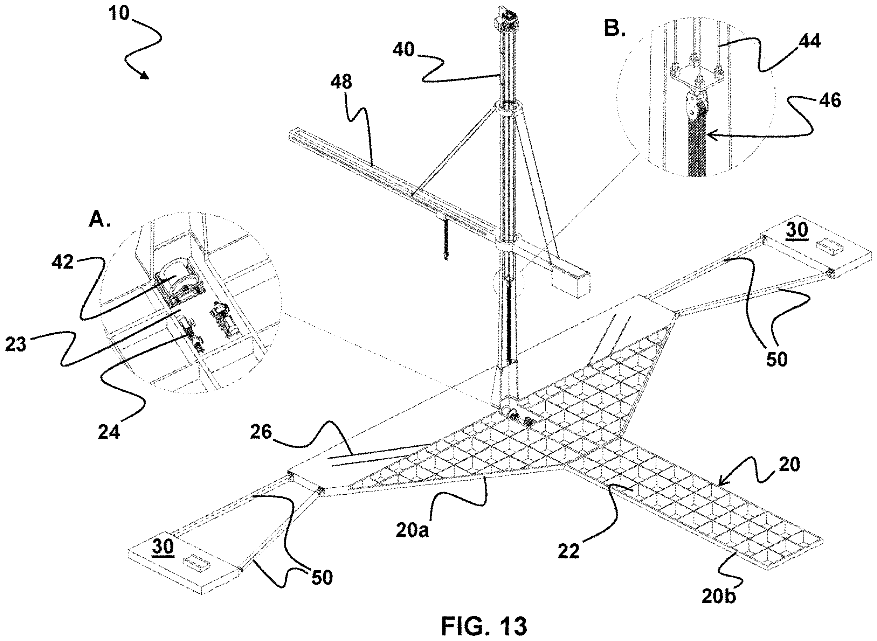

Weiter zeigt Fig. 13 eine teilweise geschnittene Ansicht einer Vorrichtung 10 zum Errichten der zuvor dargestellten schwimmenden Windenergieanlage 100 mit zwei mit einem Turm 120 verbundenen Auslegern 130, an deren Ende jeweils eine einen Rotor 140 aufweisende Energiewandlungseinheit 150 angeordnet ist. Die Vorrichtung 10 weist einen ersten Ponton 20 zur Aufnahme des schwimmenden Fundaments 110 einer schwimmenden Windenergieanlage 100 bzw. der schwimmenden Windenergieanlage 100 nach deren Fertigstellung insgesamt auf, zu dessen beiden Seiten jeweils ein zweiter Ponton 30 angeordnet ist, der zur (zeitweiligen) Aufnahme jeweils einer mit einem Ausleger 130 verbundenen Energiewandlungseinheit 150 der Windenergieanlage 100 eingerichtet ist.

Der erste Ponton 20 kann - wie oben erläutert - aus zwei Pontonelementen 20a, 20b gebildet sein. Auf jeder Seite des ersten Pontons 20 ist jeweils ein zweiter Ponton 30 angeordnet, der mithilfe von zwei Abstandselementen 50 mit dem ersten Ponton 20 verbunden ist. Die Abstandselemente 50 sind dabei sowohl mit dem ersten Ponton 20 als auch mit den zweiten Pontons 30 gelenkig verbunden, wobei die Gelenke einen Freiheitsgrad aufweisen und jeweils um eine sich horizontal erstreckende Achse drehbar eingerichtet sind. Diese erlaubt eine Beweglichkeit der zweiten Pontons 30 relativ zum ersten Ponton 20 der Höhe nach, also in der Vertikalen, beispielsweise zur Anpassung an den Wellengang, nicht jedoch in deren relativen Position in der Horizontalen. So ist gewährleistet, dass die Stirnseiten des ersten Pontons 20 und der zweiten Pontons 30 stets in einer Flucht liegen.

Der erste Ponton 20 ist speziell mit einer Mehrzahl von Kammern 22 ausgestaltet, die mittels wenigstens einer Pumpe 24 zum Erzeugen eines gewünschten Auftriebs mit Wasser geflutet bzw. mittels der Pumpe 24 ebenso entleert werden können. Die Pumpe(n) 24 sind- wie die Detailansicht (A) zeigt - in einer speziell ausgestalteten Kammer 23 angeordnet, die dauerhaft trocken eingerichtet ist.

Auf der Oberfläche des ersten Pontons 20 sind drei sternförmig angeordnete Förderstrecken 26 zum Transportieren von das schwimmende Fundament 110 aufbauenden Fundamentmodulen 112 vorgesehen. Diese Förderstrecken 26 sind insbesondere als Rollenförderer oder als Schienensystem mit darauf verfahrbaren, die Fundamentmodule 112 aufnehmenden Wagen ausgestaltet.

Auf dem ersten Ponton 20 befindet sich ein mittig zu den zweiten Pontons 30 angeordneter Hilfsturm 40, der im Fundament des Hilfsturms 40, also im ersten Ponton 20 eine Winde 42 für ein im Hilfsturm 40 geführtes Seilsystem 44 zum Anheben der mittels der Ausleger 130 mit dem Turm 120 der Windenergieanlage 100 verbundenen Energiewandlungseinheiten 150 von den zweiten Pontons 30 aufweist. Dabei ist die Winde 42 ebenso wie die Pumpen 24 in einem im ersten Ponton 20 angeordneten als Maschinenraum 23 ausgebildeten Raum angeordnet, der vom Hilfsturm 40 oder von der Oberfläche des ersten Pontons 20 begehbar ist und mechanische und elektrische Komponenten vereint. Der Maschinenraum 23 unterscheidet sich von den Kammern 22 also dadurch, dass der Maschinenraum 23 nicht geflutet wird und möglichst trocken zu halten ist. Alternativ können die Winde 42 und die Pumpen 24, sowie weitere mechanische und elektrische Komponenten auch im Turm 40 selbst angeordnet sein.

Im Hilfsturm 40 ist ein mit der Winde 42 kommunizierender Flaschenzug 46 vorgesehen. Der Flaschenzug 46 weist einen entlang der Längsachse des Hilfsturms 40 verschieblich eingerichteten Block auf, der mit dem Seilsystem 44 zum Anheben der mittels der Ausleger 130 mit dem Turm 120 der Windenergieanlage 100 verbundenen Energiewandlungseinheiten 150 verbunden ist. Insbesondere ist der verschieblich eingerichtete Block mittels eines (nicht dargestellten) Hebezeugs verschieblich eingerichtet. Diese Ausgestaltung ermöglicht eine ausreichende Kraftübertragung von der Winde 42 auf das Seilsystem 44 zum Anheben der Ausleger 130, wobei nicht das Seilsystem 44 selbst, sondern das auf der Winde 42 bevorratete und im Flaschenzug 46 geführte Seil verkürzt wird, wobei das einerseits mit dem Block des Flaschenzugs 46 und das andererseits mit den Auslegern 130 verbundene Seilsystem 44 in den Hilfsturm 40 eingezogen werden kann.

Weiter ist der Hilfsturm 40 als ein einen Kranausleger 48 aufweisender Kran ausgebildet, wobei der Kranausleger 48 um den Hilfsturm 40 drehbar eingerichtet. Am Kranausleger 48 ist eine entlang des Kranauslegers 48 verfahrbare Laufkatze 49 vorgesehen, die ein Hebezeug zum Anheben der Komponenten der zu fertigenden Windenergieanlage 100 aufweist. Insbesondere ist die Länge des Kranauslegers 48 zu einer Seite des Hilfsturms 40 so bemessen, dass der erste Ponton 20 im Schwenkbereich des Kranauslegers 48 angeordnet ist. Somit können alle Komponenten der Windenergieanlage 100 an den benötigten Orten mithilfe des Krans auf den Pontons 20, 30 abgelegt werden.

Die zweiten Pontons 30 können mit einer an die äußere Form der von den zweiten Pontons 30 aufzunehmende Energiewandlungseinheit 150 der Windenergieanlage 100 angepasste Auflage ausgestattet sein.

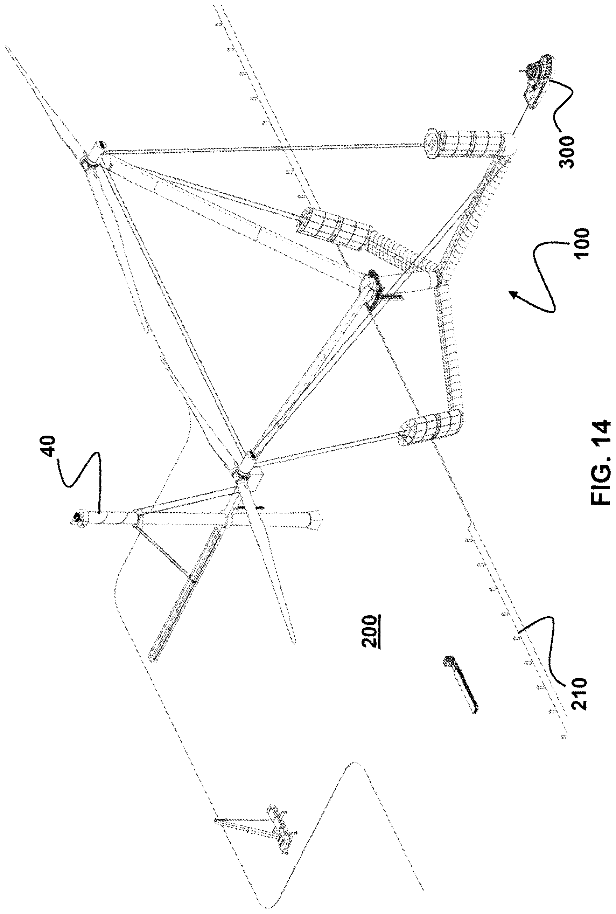

Schließlich zeigt Fig. 14 eine alternative Ausgestaltung eines Hafens 200, der im Wesentlichen die Eigenschaften des vorgenannten Hafens aufweist, im Unterschied dazu jedoch ohne Pontons auskommt. Hierfür ist vorgesehen, dass der Hilfsturm 40 auf dem Hafengelände 200, also auf dem Festland angeordnet ist. Zwischen dem Hilfsturm 40 und dem Kai 210 ist entsprechend eine Fläche, die eine Slipanlage aufweist, vorzuhalten, auf der die zu errichtende schwimmende Windenergieanlage 100 errichtet und zu Wasser gelassen werden kann. Zu diesem Zweck ist die Mauer des Kais 210 - wie aus Fig. 14 ohne weiteres ersichtlich - im Bereich des Hilfsturms 40 abgesenkt.

## Patentansprüche

1. Verfahren zum Errichten einer Windenergieanlage (100) mit einem schwimmenden Fundament (110), einem auf dem schwimmenden Fundament (110) angeordneten Turm (120) und zwei sich vom Turm (120) erstreckenden Auslegern (130) mit jeweils einer am freien Ende eines Auslegers (130) angeordneten Energiewandlungseinheit (150), das Verfahren umfassend die Schritte:
- Erstellen eines schwimmenden Fundaments (110) mit einem darauf angeordneten Turm (120);
- Einrichten wenigstens einer am Turm (120) angeordneten Stütze (122) zur Aufnahme jeweils eines Endes der gegebenenfalls mit jeweils einer Energiewandlungseinheit (150) verbundenen Ausleger (130);
- Anordnen jeweils eines Endes der Ausleger (130) auf der Stütze (122) und Anordnen des jeweils anderen Endes der Ausleger (130) auf Höhe des Turmfußes;
- Anheben des jeweils auf Höhe des Turmfußes gelagerten anderen Endes der Ausleger (130) unter gleichzeitigem Verschwenken der Ausleger (130) mit der wenigstens einen als Auflager wirkenden Stütze (122) bis zum Erreichen einer vorbestimmten Höhe;
- Fixieren der einen Enden der verschwenkten Ausleger (130) am Turm (120); und
- Ausbilden einer zwischen den anderen Enden der verschwenkten Ausleger (130) oder zwischen den Energiewandlungseinheiten (150) geführten Abspannung mittels wenigstens eines Abspannungsseils (160).

2. Verfahren nach Anspruch 1, **gekennzeichnet durch** den weiteren Schritt: Befestigen jeweils eines Rotors (140) an den Energiewandlungseinheiten (150).

3. Verfahren nach Anspruch 2, **dadurch gekennzeichnet, dass** das Befestigen der Rotoren (140) an den Energiewandlungseinheiten (150) vor dem Anheben der Ausleger (130) erfolgt.

4. Verfahren nach einem der vorhergehenden Ansprüche, **dadurch gekennzeichnet, dass** die Ausleger (130) gleichzeitig um denselben Betrag angehoben werden.

5. Verfahren nach einem der vorhergehenden Ansprüche, **dadurch gekennzeichnet, dass** die Stütze (122) als Gelenk ausgebildet ist.

## Claims

1. Method of erecting a wind energy plant (100) with a floating foundation (110), a tower (120) arranged on the floating foundation (110) and two booms (130) extending from the tower (120), each with an energy conversion unit (150) arranged at the free end of a boom (130),
the method comprising the steps of:
- constructing a floating foundation (110) with a tower (120) arranged on it;
- arranging at least one support (122) arranged at the tower (120) for receiving one end of each of the booms (130) optionally connected to a respective energy conversion unit (150);
- arranging one end of each boom (130) on the support (122) and arranging the other end of each boom (130) at the height of the tower base;
- Lifting the other end of the boom (130), which is mounted at the height of the tower base, while simultaneously swivelling the booms (130) with the at least one support (122) acting as a support until a predetermined height is reached;
- fixing one end of the swivelled booms (130) to the tower (120); and
- forming a guying guided between the other ends of the swivelled booms (130) or between the energy conversion units (150) by means of at least one guying cable (160).

2. Method according to claim 1, **characterised by** the further step of: attaching a respective rotor (140) to the energy conversion units (150).

3. Method according to claim 2, **characterised in that** the rotors (140) are attached to the energy conversion units (150) before the booms (130) are lifted.

4. Method according to one of the preceding claims, **characterised in that** the booms (130) are lifted simultaneously by the same amount.

5. Method according to one of the preceding claims, **characterised in that** the support (122) is designed as a joint.

## Revendications

1. Procédé pour la construction d'une éolienne (100) comportant une fondation flottante (110), une tour (120) disposée sur la fondation flottante (110) et deux bras (130) s'étendant depuis la tour (120) et comportant respectivement une unité de conversion d'énergie (150) disposée à l'extrémité libre d'un bras (130), le procédé comprenant les étapes consistant à:
- ériger une fondation flottante (110) comportant une tour (120) disposée sur celle-ci;
- mettre en place au moins un support (122) disposé sur la tour (120) et permettant de recevoir respectivement une extrémité des bras (130) éventuellement reliés à respectivement une unité de conversion d'énergie (150);
- disposer respectivement une extrémité des bras (130) sur le support (122) et disposer l'autre extrémité respective des bras (130) au niveau du pied de la tour;
- soulever l'autre extrémité des bras (130) respectivement montée au niveau du pied de la tour en faisant pivoter simultanément les bras (130) avec l'au moins un support (122) agissant comme appui jusqu'à atteindre une hauteur prédéterminée;
- fixer les extrémités des bras (130) pivotés à la tour (120); et
- former un haubanage guidé entre les autres extrémités des bras (130) pivotés ou entre les unités de conversion d'énergie (150) au moyen d'au moins un câble de haubanage (160).

2. Procédé selon la revendication 1, **caractérisé par** les étapes supplémentaires consistant à : fixer respectivement un rotor (140) aux unités de conversion d'énergie (150).

3. Procédé selon la revendication 2, **caractérisé en ce que** la fixation des rotors (140) aux unités de conversion d'énergie (150) est effectuée avant le soulèvement des bras (130).

4. Procédé selon l'une des revendications précédentes, **caractérisé en ce que** les bras (130) sont soulevés simultanément de la même valeur.

5. Procédé selon l'une des revendications précédentes, **caractérisé en ce que** le support (122) est conçu en tant qu'articulation.
